# EUROPÄISCHE PATENTANMELDUNG

(11) **EP 2 295 827 A2**
(43) Veröffentlichungstag der Anmeldung: **16.03.2011**
(21) Anmeldenummer: 10175526.2
(22) Anmeldetag: 07.09.2010
(51) Int. Cl.: F16F 9/32, F16F 9/54

(54) **Schwingungsdämpfer**

(30) Priorität: 09.09.2009 DE 102009029299
(71) Anmelder: ZF Friedrichshafen AG, 88038 Friedrichshafen (DE); Leichtbau-Zentrum Sachsen GmbH, 01307 Dresden (DE)
(72) Erfinder: Marquar, Hendrik, 97422 Schweinfurt (DE); Schuler, Manfred, 97456 Dittelbrunn (DE); Renn, Josef, 97337 Dettelbach (DE); Stretz, Klaus, 97437 Haßfurt (DE); Sundermann, Karin, 97526 Sennfeld (DE); Zutzmann, Michael, 97424 Schweinfurt (DE); Hufenbach, Werner, 01324 Dresden (DE); Lepper, Martin, 01279 Dresden (DE); Werner, Jens, 01640 Coswig (DE); Ladusch, Enrico, 01187 Dresden (DE); Effmert, Stefan, 01796 Pirna (DE)

(57) **Zusammenfassung**

Schwingungsdämpfer (1) umfassend einen Zylinder (3) mit einem zylinderseitigen Anschlussorgan (5), wobei an dem Zylinder das mindestens eine Anbauteil (7-11) stoffschlüssig befestigt ist, und der Zylinder und das Anbauteil aus Kunststoff bestehen, wobei das Anbauteil und/oder der Zylinder auf mindestens einem vorkonfektionierten Halbzeug (3p;5p;7a;7b;7c) basiert, das an mindestens einer Körperseite die Oberfläche des Schwingungsdämpfers im Endzustand bildet und Kunststoffzusatzvolmenanteile die fertige Körperkontur bestimmen.

## Beschreibung

Die Erfindung betrifft einen Schwingungsdämpfer für einen Kraftfahrzeugfahrwerk gemäß dem Oberbegriff von Patentanspruch 1.

Aus der gattungsbildenden DE 42 32 136 A1 ist ein Federbein bekannt, das in einem Gießverfahren hergestellt wird. Als Werkstoffe für das Gießverfahren werden ausschließlich metallische Werkstoffe genannt. Ein Federbein als tragendes Bauteil in einem Kraftfahrzeugfahrwerk unterliegt einer großen Belastung, so dass an die Werkstoffe hinsichtlich der Festigkeitskennwerte entsprechend hohe Anforderungen gestellt werden. Ein derartiges Federbein ist jedoch vergleichsweise schwer. Deshalb wird in der DE 42 32 136 A1 als ein möglicher Leichtbauwerkstoff auf Aluminium verwiesen. Aluminium ist jedoch ein relativ teurer Werkstoff, der insbesondere deshalb bei Schwingungsdämpfern für Fahrzeuge der Kompaktklasse keine nennenswerte Verwendung gefunden hat.

In der EP 0 027 163 A1 wird vorgeschlagen, ein äußeres Mantelrohr eines Schwingungsdämpfers aus Kunststoff zu fertigen. Ein innerer Arbeitszylinder besteht aus metallischem Werkstoff. Funktionsbedingt steht der innere Arbeitszylinder unter dem Betriebsdruck innerhalb der Arbeitsräume. Im Vergleich dazu wird das äußere Mantelrohr deutlich geringer belastet, da einerseits das mantelrohrseitige Anschlussorgan über einen metallischen Verbindungsstift mit dem Bodenventil und dem Arbeitszylinder verbunden ist und andererseits im Ausgleichsraum wenn überhaupt ein deutlich niedrigeres Druckniveau herrscht als in einem Arbeitsraum des inneren Arbeitszylinders.

Aus der DE 103 20 002 A1 ist es bekannt, eine Kolbenstange für einen Schwingungsdämpfer aus Kunststoff herzustellen.

Aus der DE 10 2007 053 120 A1 ist es bekannt, einen Achsschenkel für ein Kraftfahrzeugfahrwerk aus einem Faserverbundwerkstoff herzustellen. Der Achsschenkel weist eine schalenförmige Grundstruktur auf und ist über einen schellenartigen Verschluss mit einem Federbein verbunden. Die Grundlage des Achsschenkels bildet ein Gewebe oder ein Flies, das in die vorbestimmte Form des Achsschenkels gebracht werden muss. Dieses Grundgerüst wird in eine Form eingelegt und mit einem Füllstoff überzogen. Das gegossene Teil muss ggf. durch mechanische Nacharbeit in die endgültige Form gebracht werden. Komplexe Bauteile wie ein Achsschenkel verfügen damit zwangsläufig auch über eine entsprechend aufwändige Faserarmierung.

Die Aufgabe der vorliegenden Erfindung besteht darin, einen Schwingungsdämpfer, insbesondere ein Federbein, hinsichtlich der Masse zu reduzieren.

Erfindungsgemäß wird die Aufgabe dadurch gelöst, dass der Zylinder und das Anbauteil aus Kunststoff bestehen, wobei das Anbauteil und/oder der Zylinder auf mindestens einem vorkonfektionierten Halbzeug basiert, das an mindestens einer Körperseite die Oberfläche des Schwingungsdämpfers im Endzustand bildet und Kunststoffzusatzvolumenanteile die fertige Körperkontur bestimmen.

Der große Vorteil besteht darin, dass durch die Verwendung der vorkonfektionierten Halbzeuge die Herstellungstaktzeiten deutlich gesenkt werden können im Vergleich zu einer konventionellen Herstellung wie aus dem Stand der Technik bekannt ist. Bedingt durch die gute Oberflächenqualität der Halbzeuge ist, wenn überhaupt, nur eine geringe Nacharbeit erforderlich, die sich auf die Bereiche beschränken kann, die funktionsrelevant sind. Des Weiteren können quahtätsbestimmende Bauteiltoleranzen, wie z. B. Formgenauigkeit, deutlich verbessert werden.

In weiterer vorteilhafter Ausgestaltung weist das Halbzeug eine Armierung und einen diesen einhüllenden Füllstoff auf, wobei der Füllstoff und das Kunststoffzusatzvolumen von einem gleichartigen Werkstoff gebildet werden. Es entsteht ein optisch homogenes Bauteil, ohne Farbabweichungen oder Nahtstellen.

Man kann vorsehen, dass sich die Armierung über die Seitenkanten hinaus erstreckt. Die Armierung in den Halbzeugen ist langfaserig ausgeführt und richtungsdefiniert. Die Kunststoffzusatzvolumenanteile enthalten ebenfalls eine Armierung, die jedoch aus kurzen Fasern besteht. Die aus den Halbzeugen herausragenden Armierungsteile werden von den Kunststoffzusatzvolumenanteilen umschlossen und verbessern nachhaltig die Festigkeit des gesamten Bauteils.

Man kann vorsehen, dass die Armierung Teil einer Sensoreinrichtung ist. Man kann die Armierung mit wenig Aufwand elektrisch leitend ausführen und erhält damit praktisch die Funktion eines Dehnungsmessstreifens.

Optional kann das Halbzeug zur Einbindung in den Schwingungsdämpfer ein Anschlussprofil aufweisen. Man vergrößert dadurch die Anschlussflächen, so dass mehr Kunststoffzusatzvolumenanteile eingebracht werden können.

Zur Steigerung der Festigkeit können mehrere Anbauteile durch einen Verbindungssteg zusammengefasst sein.

Der Verbindungssteg ist gurtförmig mit seinen beiden Enden am Zylinder angesetzt und bildet damit ein geschlossenes Strebenprofil.

Zur optimierten Krafteinleitung, d. h. mit einer Druckbelastung, ist der Verbindungssteg in einem spitzen Winkel am Zylinder angeschlossen.

Um eine möglichst große Kontaktfläche zu erreichen, weist der Verbindungssteg einen an die gekrümmte Oberfläche des Zylinders angepassten Anschlussbereich auf.

Um den unterschiedlichen Belastungen optimal gerecht zu werden, weist der Verbindungssteg über den Umfang betrachtet eine unterschiedliche Breite auf. Dadurch kann der Materialeinsatz und damit die Masse des Schwingungsdämpfers weiter minimiert werden.

Das zylinderseitige Anschlussorgan ist radial innerhalb des Verbindungsstegs angeordnet und stützt sich an diesem ab.

Zur weiteren Versteifung des Verbindungsstegs sind radial innerhalb des Verbindungsstegs Druckspeichen angeordnet.

Dabei setzen die Druckspeichen am zylinderseitigen Anschlussorgan an. Der Verbindungssteg, die Druckspeichen und das zylinderseitige Anschlussorgan bilden eine Art Radprofil.

Um den belastungsspezifischen Gegebenheiten zu begegnen, sind ausgehend von dem zylinderseitigen Anschlussorgan mehrere Druckspeichen parallel zur Längsachse des Schwingungsdämpfers ausgeführt. Mehrere dünnere Druckspeichen führen zu einer Elastizität in einer Richtung sorgen aber für eine hohe Gestaltfestigkeit in einer anderen Richtung.

Die Druckspeichen können standardisiert sein, aber in einer bevorzugten Ausführung weisen sie eine unterschiedliche Breite und/oder Materialstärke auf, um eine möglichst geringes Gewicht zu erzielen.

Zur weiteren Versteifung des Schwingungsdämpfers können die Druckspeichen und der gurtförmige Verbindungssteg durch einen Verbindungsboden ein Kastenprofil bilden.

In den Anbauteilen oder dem Verbindungssteg sind Anschlussmittel angeordnet, die aus einem vom Füllstoff abweichenden Werkstoff gebildet werden. Z. B. können die Anschlussmittel als metallische Gewindebuchsen ausgeführt sein.

Es ist möglich, dass der Zylinder einen Boden aufweist, an dem ein Anschluss für eine Kolbenstange des Schwingungsdämpfers ausgeführt ist. Der Schwingungsdämpfer ist dann als Patrone konzipiert, die in den Zylinder auswechselbar montierbar ist.

In weiterer vorteilhafter Ausgestaltung weist der Zylinder innenseitig eine axiale Gleitlagerung für einen Außenzylinder des Schwingungsdämpfers auf. Die Kunststoffoberfläche des Zylinders sorgt für eine reibungsarme Relativbewegung zwischen dem Außenzylinder und dem Zylinder.

Bei dem erfindungsgemäßen Verfahren werden der Zylinder und die vorkonfektionierten Halbzeuge in eine Vorrichtung eingesetzt. Spalte zwischen den

Halbzeugen und/oder dem Zylinder werden mit Kunststoffzusatzvolumenanteilen ergänzt. Der große Vorteil besteht einerseits in der kürzeren Taktzeit, aber auch im einfacheren Aufbau der Vorrichtung. Man kann z. B. die Anzahl der verwendeten Druckspeicher einfach ausführen oder in den Halbzeugen schon die Anschlussmittel einsetzen.

Es ist vorgesehen, dass das Kunststoffzusatzvolumen in Granulatform in die Vorrichtung eingebracht und anschließend erhitzt wird. Die üblichen Konstruktionsvorschriften, z. B. die Vermeidung von Werkstoffanhäufungen beim Übergang zwei Wandungen, müssen nicht mehr beachtet werden.

Für eine optimale Festigkeit des Schwingungsdämpfers ist die Faserrichtung wichtig. Deshalb wird in einem vorgelagerten Verfahrensschritt ein Halbzeugvorprodukt mit einem ausgerichteten Verlauf des Faserwerkstoffs erzeugt. Das Halbzeugvorprodukt kann eine Platte, ein Rohr oder auch ein Winkelprofil sein.

Die Halbzeuge werden aus dem Halbzeugvorprodukt ausgeformt. Durch eine gezielte Winkelstellung zwischen der Armierung und z. B. den Seitenkanten des Halbzeugs kann man den Faserverlauf individuell gestalten.

Anhand der folgenden Figurenbeschreibung soll die Erfindung näher erläutert werden.

Es zeigt:
- Fig. 1 - 4: Schwingungsdämpfer mit Achsschenkel
- Fig. 5: Beispiel für ein Halbzeug
- Fig. 6: Halbzeug mit Anschlussprofil
- Fig. 7: Zylinder mit Boden im Detail
- Fig. 8-11: Schwingungsdämpfer mit Verbindungssteg
- Fig. 12: Ausschnitt aus Verbindungssteg nach Fig. 10
- Fig. 13: Zylinder mit Federteller in Schnittdarstellung

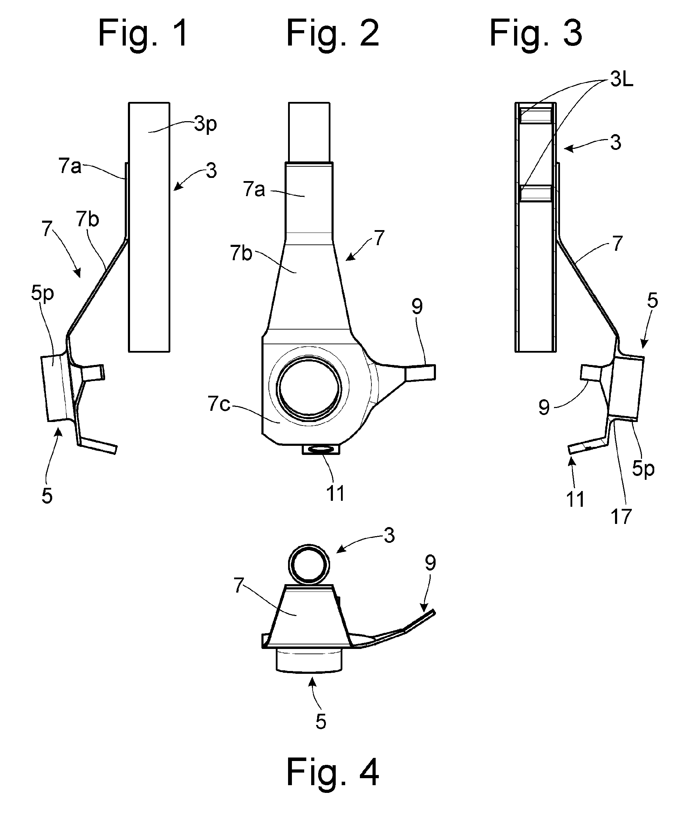

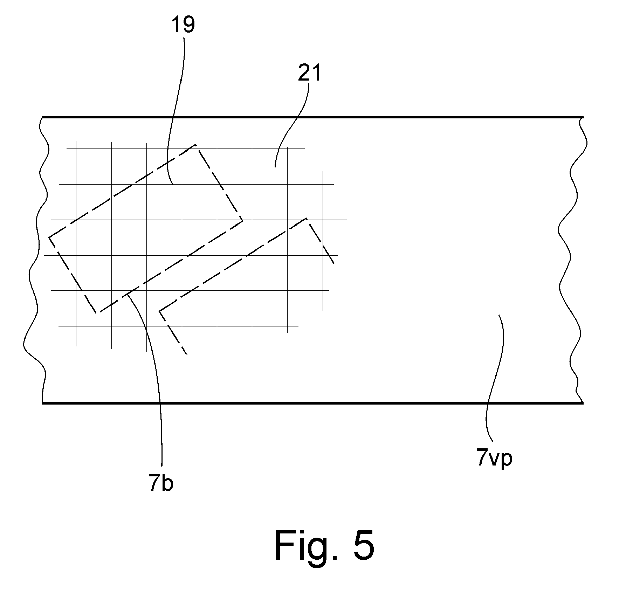

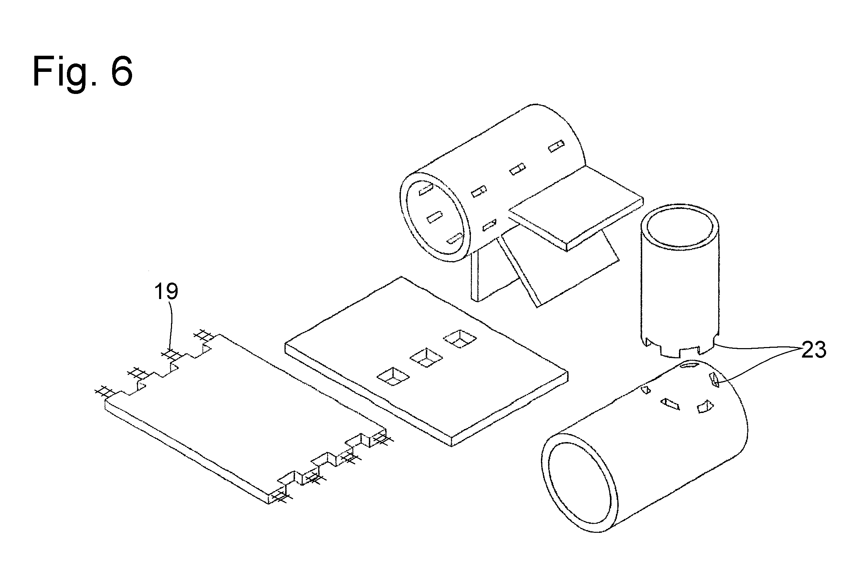

Die Zusammenschau der Figuren 1 bis 4 beschreibt vereinfacht einen Schwingungsdämpfer 1 mit einem Zylinder 3, an dem ein zylinderseitiges Anschlussorgan 5 ausgeführt ist. Des Weiteren verfügt der Zylinder 3 über mindestens ein Anbauteil 7, das stoffschlüssig mit dem Zylinder 3 befestigt ist. Der Zylinder 3 und das Anbauteil 7 bestehen aus Kunststoff. In dieser Variante bildet ein Achsschenkel 7 ein erstes Anbauteil und an dem Achsschenkel sind weitere Anbauteile 9; 11 ausgeführt. Die Anbauteile 7; 9; 11 basieren auf vorkonfektionierten Halbzeugen, wobei die Halbzeuge an mindestens einer Körperseite die Oberfläche des Schwingungsdämpfers im Endzustand bildet. Als Halbzeuge dienen in diesem Ausführungsbeispiel z. B. Plattenelemente 7a; 7b; 7c, aber auch mindestens ein Rohrelement 3p für den Zylinder 3 und ein weiteres Rohrelement 5p für das zylinderseitige Anschlussorgan 5. Die Kontaktbereiche zwischen den vorkonfektionierten Halbzeugen oder auch Übergänge 13-17 zum Zylinder werden von Kunststoffzusatzvolumenanteilen gebildet, die die fertige Körperkontur bestimmen. Jedes Halbzeug z. B. 7b in der Fig. 5, verfügt über eine gewebeartige Armierung, die von einem Füllstoff 21 eingehüllt wird. Der Füllstoff und das Kunststoffzusatzvolumen zwischen den Halbzeugen werden von einem gleichartigen Werkstoff gebildet, so dass eine einheitliche Oberfläche und Optik aller Anbauteile inklusive dem Zylinder erreicht werden kann. Die Armierung 19 in den Halbzeugen kann sich über die Seitenkanten hinaus erstrecken (Fig. 6), so dass der Füllstoff des Kunststoffzusatzvolumens diese Armierung einhüllt und umschließt. Des Weiteren besteht noch die Möglichkeit, dass die Halbzeuge zur Einbindung in den Schwingungsdämpfer Anschlussprofile 23 aufweisen. Diese Anschlussprofile können z.B. fingerartige Fortsätze sein, die in das benachbarte Halbzeug eingreifen. Etwaige Spalte oder Lücken werden von dem Kunststoffzusatzvolumen geschlossen bzw. aufgefüllt. Das Herstellungsverfahren für einen erfindungsgemäßen Schwingungsdämpfer mit mindestens einem Anbauteil gestaltet sich wie folgt: In einem ersten Verfahrensschritt wird ein Halbzeugvorprodukt 7vp mit einem ausgerichteten Verlauf der Armierung erzeugt wie Fig. 5 zeigt. Als Halbzeugvorprodukt kann z.B. eine Platte, ein Rohr oder ein Winkelprofil angesehen werden. Ein Halbzeugvorprodukt verfügt über eine sehr einfache Geometrie, so dass sich der Faserverlauf z. B. bezogen auf eine Kante oder Fläche einfach ausrichten lässt. Derartig ausgerichtete Fasern können auch Teil einer nicht dargestellten Sensoreinrichtung sein, z. B. nach dem Prinzip eines Dehnungsmess-Streifens, um z. B. Radaufstandskräfte zu messen. In einem nachgeordneten Verfahrensschritt wird ein Halbzeug aus dem Halbzeugvorprodukt ausgeformt. Dieser Zusammenhang soll durch die gestrichelt dargestellte Kontur des Halbzeugs verdeutlicht werden. Durch eine einfache Verdrehung des Halbzeugvorprodukts zum halbfertigen Halbzeug kann sehr einfach und präzise der Verlauf des Faserwerkstoffs bestimmt werden. Das Herausarbeiten eines Halbzeugs aus einem Halbzeugvorprodukt kann z.B. mittels Laser, Stanze oder auch Säge erreicht werden. Die so erzeugten Halbzeuge werden in eine nicht dargestellte Vorrichtung eingesetzt. In die noch offenen Spalte bzw. Freiräume werden in Granulatform das Kunststoffzusatzvolumen eingebracht und anschließend erhitzt. Dadurch verbinden sich alle vorkonfektionierten Halbzeuge zu einem unlösbaren ganzen Bauteil.

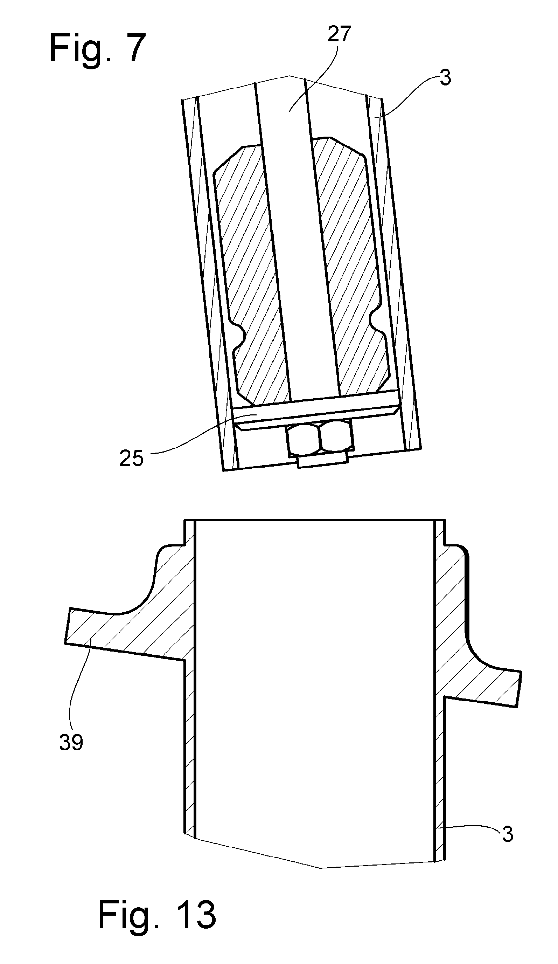

Der Zylinder 3 gemäß den Figuren 1 bis 3 nimmt den Schwingungsdämpfer als Patrone auf. Derartige Lösungen sind z.B. aus der DE 29 34 671 A1 oder der DE 33 01 774 A1 bekannt. Dazu kann der Zylinder 3 gemäß der Figur 7 mit einem Boden 25 ausgeführt sein, der einen Anschluss für eine Kolbenstange 27 oder einen Außenzylinder des Schwingungsdämpfers aufweist. Des Weiteren ist aus der Figur 3 ersichtlich, dass der Zylinder 3 innenseitig eine Gleitlagerung 3L für den Außenzylinder des Schwingungsdämpfers aufweist, nämlich dann, wenn die Kolbenstange 27 des Schwingungsdämpfers fest mit dem Zylinder 3 verbunden ist.

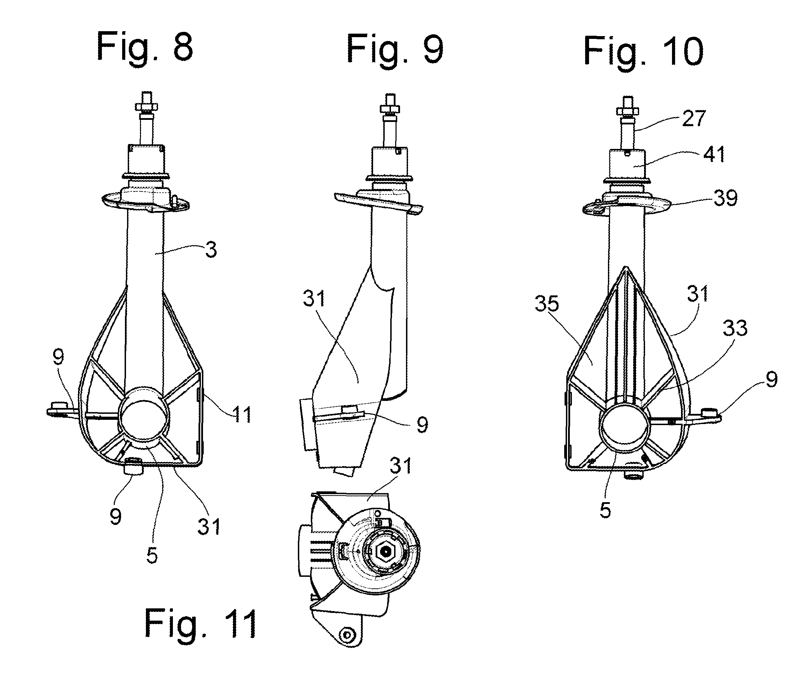

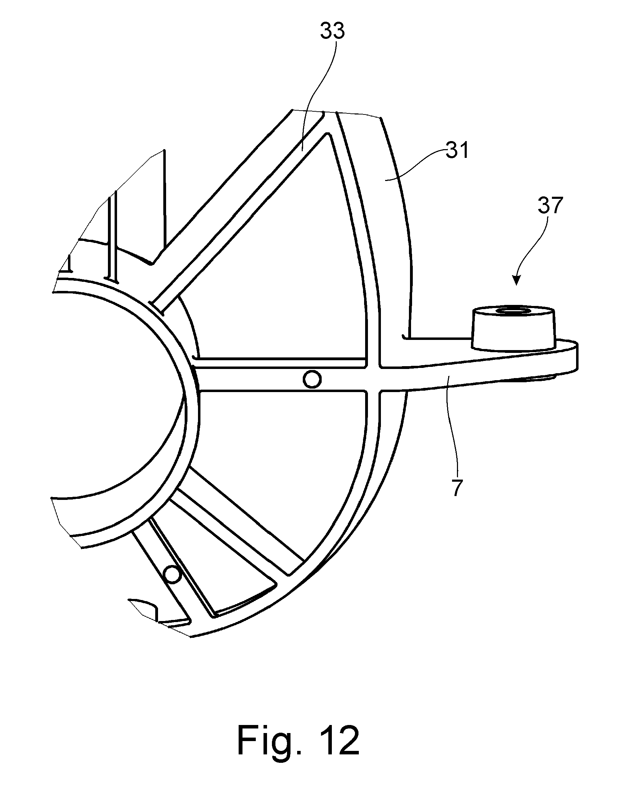

Die Figurengruppe 8-11 zeigt eine Ausführungsform eines Schwingungsdämpfers 1, bei dem mehrere Anbauteile 5-9 durch einen Verbindungssteg 31 zusammengefasst sind. Der Verbindungssteg 31 ist gurtförmig mit seinen beiden Enden am Zylinder 3 angesetzt. Die Enden des Verbindungsstegs 31 laufen in einem spitzen Winkel am Zylinder 3 aus und sind an die gekrümmte Oberfläche des Zylinders 3 angepasst. Aus der Figur 9 ist ersichtlich, dass der Verbindungssteg über den Umfang betrachtet eine unterschiedliche Breite aufweist. Radial innerhalb des Verbindungsstegs 31 ist das zylinderseitige Anschlussorgan 5 angeordnet. Des Weiteren sind innerhalb des Verbindungsstegs 31 radial verlaufende Druckspeichen 33 angeordnet, die am zylinderseitigen Anschlussorgan 5 angesetzt sind und mit ihren nach außen weisenden Enden am Verbindungssteg 31 auslaufen. Die Druckspeichen 33 können belastungsabhängig eine unterschiedliche Breite aufweisen, auch ist es möglich und sinnvoll, dass ausgehend von dem zylinderseitigen Anschlussorgan mehrere Druckspeichen 33 parallel zur Längsachse des Schwingungsdämpfers (Fig. 10) ausgeführt sind. Die Druckspeichen 33 und der gurtförmige Verbindungssteg 31 können ggf. über einen Verbindungsboden 35 ein geschlossenes Kastenprofil bilden. In der Figur 12 ist erkennbar, dass in den Anbauteilen 7-11 oder dem Verbindungssteg 31 Anschlussmittel 37 angeordnet sind, die aus einem vom Füllstoff 21 abweichenden Werkstoff gebildet werden, z.B. metallische Gewindehülsen. Auch diese Variante würde nach dem vorstehend beschriebenen Verfahren hergestellt, in dem z.B. die Druckspeichen 33 und der Verbindungsgurt 31 sowie der Zylinder 3 als vorgefertigte Halbzeuge in eine Vorrichtung eingelegt werden. Zusätzlich zur Darstellung nach den Figuren 1 - 4 ist in den Figuren 8-11 erkennbar, dass am Zylinder 3 ein Federteller 39 fixiert ist (Fig. 13). Dieser Federteller 39 kann wie ebenso als Halbzeug oder auch vollständig aus Füllstoff vorgeformt werden und in der Vorrichtung mit dem Zylinder verbunden werden.

Die Patrone des Schwingungsdämpfers 1 wird in der Ausführung nach dem Figurenblatt 2 einerseits im Zylinder 3 axial und radial gehalten und zur Sicherung wird eine Kappe verwendet, die stirnseitig auf der Patrone des Schwingungsdämpfers 1 angreift und mit dem Zylinder 3 in bekannter Weise verbunden wird, so dass ein geschlossenes äußeres Behältnis vorliegt, aus dem z.B. die Kolbenstange 27 des Schwingungsdämpfers 1 herausragt.

Insgesamt kann durch die dargestellte Konstruktion im Vergleich zu einem metallischen Zylinder mit Anbauteilen ein deutlicher Massevorteil erreicht werden.

### Bezugszeichenliste

- 1: Schwingungsdämpfer
- 3: Zylinder
- 3L: Gleitlagerung
- 5: zylinderseitiges Anschlussorgan
- 7; 9; 11: Anbauteil
- 7a; 7b; 7c; 3p; 5p: Plattenelemente
- 7vp: Halbzeugvorprodukt
- 13-17: Übergänge
- 19: Armierung
- 21: Füllstoff
- 23: Anschlussprofile
- 25: Boden
- 27: Kolbenstange
- 29: äußeres Rohr
- 31: Verbindungssteg
- 33: Druckspeichen
- 35: Verbindungsboden
- 37: Anschlussmittel
- 39: Federteller
- 41: Kappe

## Patentansprüche

1. Schwingungsdämpfer (1), umfassend einen Zylinder (3) mit einem zylinderseitigen Anschlussorgan (5), wobei an dem Zylinder (3) das mindestens eine Anbauteil (7-11) stoffschlüssig befestigt ist,
**dadurch gekennzeichnet,**
**dass** der Zylinder (3) und das Anbauteil (7-11) aus Kunststoff bestehen, wobei das Anbauteil (7 - 11) und/oder der Zylinder (3) auf mindestens einem vorkonfektionierten Halbzeug (3p; 5p; 7a; 7b; 7c) basiert, das an mindestens einer Körperseite die Oberfläche des Schwingungsdämpfers (1) im Endzustand bildet und Kunststoffzusatzvolumenanteile die fertige Körperkontur bestimmen.

2. Schwingungsdämpfer nach Anspruch 1,
**dadurch gekennzeichnet,**
**dass** das Halbzeug eine Armierung (19) und einen diesen einhüllenden Füllstoff (21) aufweist, wobei der Füllstoff (21) und das Kunststoffzusatzvolumen von einem gleichartigen Werkstoff gebildet werden.

3. Schwingungsdämpfer nach Anspruch 2,
**dadurch gekennzeichnet,**
**dass** sich die Armierung (19) über die Seitenkanten hinaus erstreckt.

4. Schwingungsdämpfer nach Anspruch 2,
**dadurch gekennzeichnet,**
**dass** die Armierung (19) Teil einer Sensoreinrichtung ist.

5. Schwingungsdämpfer nach Anspruch 1,
**dadurch gekennzeichnet,**
**dass** das Halbzeug (3p; 5p; 7a; 7b; 7c) zur Einbindung in den Schwingungsdämpfer 1 ein Anschlussprofil (23) aufweist.

6. Schwingungsdämpfer nach Anspruch 1,
**dadurch gekennzeichnet,**
**dass** mehrere Anbauteile (7 - 11) durch einen Verbindungssteg (31) zusammengefasst sind.

7. Schwingungsdämpfer nach Anspruch 6,
**dadurch gekennzeichnet,**
**dass** der Verbindungssteg (31) gurtförmig mit seinen beiden Enden am Zylinder (3) angesetzt ist.

8. Schwingungsdämpfer nach Anspruch 7,
**dadurch gekennzeichnet,**
**dass** der Verbindungssteg (31) in einem spitzen Winkel am Zylinder (3) angeschlossen ist.

9. Schwingungsdämpfer nach Anspruch 7,
**dadurch gekennzeichnet,**
**dass** der Verbindungssteg (31) einen an die gekrümmte Oberfläche des Zylinders (3) angepassten Anschlussbereich aufweist.

10. Schwingungsdämpfer nach Anspruch 7,
**dadurch gekennzeichnet,**
**dass** der Verbindungssteg (31) über den Umfang betrachtet eine unterschiedliche Breite aufweist.

11. Schwingungsdämpfer nach Anspruch 7,
**dadurch gekennzeichnet,**
**dass** radial innerhalb des Verbindungsstegs das zylinderseitige Anschlussorgan angeordnet ist.

12. Schwingungsdämpfer nach Anspruch 7,
**dadurch gekennzeichnet,**
**dass** radial innerhalb des Verbindungsstegs (31) Druckspeichen (33) angeordnet sind.

13. Schwingungsdämpfer nach Anspruch 12,
**dadurch gekennzeichnet,**
**dass** die Druckspeichen (33) am zylinderseitigen Anschlussorgan (5) ansetzen.

14. Schwingungsdämpfer nach Anspruch 13,
**dadurch gekennzeichnet,**
**dass** ausgehend von dem zylinderseitigen Anschlussorgan (5) mehrere Druckspeichen (33) parallel zur Längsachse des Schwingungsdämpfers (1) ausgeführt sind.

15. Schwingungsdämpfer nach Anspruch 7,
**dadurch gekennzeichnet,**
**dass** die Druckspeichen (33) eine unterschiedliche Breite aufweisen.

16. Schwingungsdämpfer nach Anspruch 7,
**dadurch gekennzeichnet,**
**dass** die Druckspeichen (33) und der gurtförmige Verbindungssteg (31) durch einen Verbindungsboden (35) ein Kastenprofil bilden.

17. Schwingungsdämpfer nach Anspruch 1,
**dadurch gekennzeichnet,**
**dass** in den Anbauteilen (7-11) und/oder dem Verbindungssteg (31) Anschlussmittel (37) angeordnet sind, die aus einem vom Füllstoff (21) abweichenden Werkstoff gebildet werden.

18. Schwingungsdämpfer nach einem der Ansprüche 1-17,
**dadurch gekennzeichnet,**
**dass** der Zylinder (3) einen Boden (25) aufweist, an dem ein Anschluss für eine Kolbenstange (27) des Schwingungsdämpfers ausgeführt ist.

19. Schwingungsdämpfer nach Anspruch 1,
**dadurch gekennzeichnet,**
**dass** der Zylinder (3) innenseitig eine axiale Gleitlagerung (3L) für einen Außenzylinder des Schwingungsdämpfers (1) aufweist.

20. Verfahren zur Herstellung eines Schwingungsdämpfer nach Anspruch 1,
**dadurch gekennzeichnet,**
**dass** der Zylinder (3) und die vorkonfektionierten Halbzeuge (3p; 5p; 7a; 7b; 7c) in eine Vorrichtung eingesetzt werden und Spalte zwischen den Halbzeugen (3p; 5p; 7a; 7b; 7c) und/oder dem Zylinder (3) mit Kunststoffzusatzvolumenanteilen ergänzt werden.

21. Verfahren nach Anspruch 20,
**dadurch gekennzeichnet,**
**dass** das Kunststoffzusatzvolumen in Granulatform in die Vorrichtung eingebracht und anschließend erhitzt wird.

22. Verfahren nach Anspruch 20,
**dadurch gekennzeichnet,**
**dass** in einem Verfahrensschritt ein Halbzeugvorprodukt (7vp) mit einem ausgerichteten Verlauf des Faserwerkstoffs (19) erzeugt wird.

23. Verfahren nach Anspruch 22,
**dadurch gekennzeichnet,**
**dass** die Halbzeuge (3p; 5p; 7a; 7b; 7c) aus dem Halbzeugvorprodukt (7vp) ausgeformt werden.
